(19) Europäisches Patentamt / European Patent Office / Office européen des brevets

(11) **EP 2 682 655 B1**

(12) **FASCICULE DE BREVET EUROPEEN**

(45) Date de publication et mention
de la délivrance du brevet:
**27.09.2023 Bulletin 2023/39**

(21) Numéro de dépôt: **13175032.5**

(22) Date de dépôt: **04.07.2013**

(51) Classification Internationale des Brevets (IPC):
**F16K 31/06** *(2006.01)*     **F16F 1/32** *(2006.01)*

(52) Classification Coopérative des Brevets (CPC):
**F16F 1/027; F16K 31/0658**

(54) **Electrovanne du type à noyau plat et ressort plat**

Magnetventil mit flachem Kern und flacher Feder

Flat-core and flat-spring solenoid valve

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.07.2012 FR 1256485**

(43) Date de publication de la demande:
**08.01.2014 Bulletin 2014/02**

(73) Titulaire: **ASCO SAS
28110 Lucé (FR)**

(72) Inventeur: **Vandamme, Richard
28300 CINTRAY (FR)**

(74) Mandataire: **Cabinet Nony
11 rue Saint-Georges
75009 Paris (FR)**

(56) Documents cités:
**EP-A1- 1 217 272    FR-A1- 2 348 058
GB-A- 2 094 946    US-A- 5 211 372
US-B1- 7 748 683**

**Description**

La présente invention concerne les électrovannes et plus particulièrement mais non exclusivement les électrovannes pneumatiques, notamment celles utilisées avec des automates pour contrôler une alimentation en air comprimé.

L'invention s'intéresse notamment aux électrovannes dites miniatures, c'est-à-dire celles tenant dans un volume typiquement inférieur à 20 cm$^3$.

Une électrovanne comporte classiquement une bobine excitée par un courant électrique et un élément mobile sous l'effet du champ magnétique généré lors de l'alimentation de la bobine, cet élément mobile étant porteur d'un joint de clapet. Un ressort de rappel préchargé est prévu pour appliquer le joint contre un siège de l'électrovanne en l'absence d'excitation de la bobine, dans une position dite de repos, afin de fermer une communication fluidique.

Lors de l'excitation de la bobine, l'élément mobile passe en position dite de collage et le ressort de rappel exerce sur l'élément mobile une force de rappel qui est supérieure à celle exercée sur ce même élément lorsque l'électrovanne est non alimentée électriquement.

L'effort exercé sur l'élément mobile par le ressort de rappel doit être parfaitement contrôlé afin d'assurer l'étanchéité de la fermeture en position de repos, malgré l'effort inverse généré par le fluide sous pression, sans pour autant empêcher l'élément mobile de se déplacer lors de l'alimentation électrique de la bobine. Le ressort doit également ramener l'élément mobile en position initiale, lorsque l'alimentation électrique cesse.

Deux types de construction d'électrovanne se rencontrent, l'une dite à « noyau mobile plongeur » et l'autre dite à « noyau mobile plat ».

Le brevet EP 1 536 169 B1 illustre, notamment à la figure 1 de ce brevet antérieur, le premier type de construction, dans lequel l'élément mobile se présente sous la forme d'un noyau engagé profondément dans la bobine. Dans l'électrovanne illustrée dans ce brevet, deux ressorts plats sont présents, dont l'un est monté à proximité du joint de clapet. Ce ressort plat comporte une couronne centrale définissant un trou de diamètre relativement faible, reliée par trois bras flexibles à une couronne périphérique, comme illustré à la figure 4 de ce brevet, qui a été reproduite à la figure 1A de la présente demande. La couronne centrale est serrée entre une vis qui porte le joint de clapet et le corps du noyau mobile, et la couronne périphérique est serrée entre une bague de maintien et le corps d'une pièce servant au raccordement de l'électrovanne avec une arrivée et une sortie de fluide. Le ressort est ainsi maintenu en place par des liaisons à encastrement. La différence de diamètre relativement grande entre les couronnes centrale et périphérique autorise une grande liberté dans le choix de la forme des bras reliant les couronnes centrale et périphérique, et les bras comportent des portions travaillant en flexion, de forme générale en arc de spirale, reliées chacune par une portion travaillant en torsion, orientée radialement et se raccordant à la couronne centrale.

La demande WO 2011/095928 au nom de la demanderesse illustre une électrovanne du second type de construction, à noyau mobile plat. Le joint de clapet est porté par un noyau mobile qui ne s'engage pas à l'intérieur de la bobine mais se déplace en regard d'un noyau fixe disposé dans celle-ci. Un ressort plat de rappel est engagé autour du noyau mobile. Le ressort plat peut exercer une fonction de centrage. La différence de diamètre entre le trou central par lequel le ressort est engagé sur le noyau mobile et le contour extérieur de la couronne périphérique est relativement faible.

La demande WO 2008/028509 décrit un autre exemple de construction d'électrovanne à noyau mobile plat. Le brevet EP 1 350 999 B1 divulgue également, à la figure 1A de ce brevet, une construction à noyau mobile plat.

L'invention s'intéresse plus particulièrement à l'amélioration des électrovannes à noyau mobile plat.

Comme indiqué ci-dessus, lors de l'excitation de la bobine, le noyau mobile se déplace en direction du noyau fixe et le ressort de rappel se déforme. Lorsque l'excitation cesse, le noyau mobile doit revenir en position de repos, de fermeture de l'orifice défini par le siège du joint de clapet.

Dans la pratique, un courant résiduel, encore appelé courant de fuite, peut exister dans le circuit de commande de la bobine lorsque l'électrovanne doit, selon la consigne de commande appliquée, retourner dans la configuration de repos, et le champ magnétique correspondant généré par la bobine tend à s'opposer à la retombée du noyau mobile. Ce courant de fuite dépend généralement de la qualité de l'automate utilisé pour commander l'électrovanne, et une faible tolérance de l'électrovanne au courant de fuite oblige à utiliser un automate à moindre courant résiduel, plus coûteux.

Un autre phénomène s'opposant à la retombée du noyau mobile résulte de la rémanence magnétique liée aux caractéristiques intrinsèques des matériaux utilisés. Le niveau de rémanence dépend des propriétés magnétiques et diminuer ce niveau pour faciliter la retombée du noyau mobile lorsque l'alimentation de la bobine a cessé passe généralement par l'emploi de matériaux plus performants et plus onéreux.

Il n'est pas bénéfique de contrer l'effet néfaste du courant de fuite et de la rémanence magnétique en augmentant simplement la raideur du ressort, car cette augmentation rend alors plus difficile le décollement du joint de clapet lors de l'excitation de la bobine et, de plus, les contraintes exercées par le ressort au repos dépendent des tolérances de fabrication des pièces; plus la raideur du ressort augmente, plus les contraintes mécaniques résiduelles après assemblage risquent d'être importantes et préjudiciables au bon fonctionnement de l'électrovanne.

Une solution déjà employée dans certaines électrovannes à noyau mobile plongeur sensibles à ce phénomène d'efforts résiduels et/ou rémanents consiste à utiliser un ressort à raideur variable, capable de fournir une raideur limitée dans la position de repos et une raideur augmentée dans la position de collage.

Des ressorts coniques à raideur variable ont ainsi été utilisés dans les électrovannes à noyaux mobiles plongeurs, étant réalisés en enroulant un fil métallique de façon à faire varier progressivement le diamètre d'enroulement.

Une solution de ressort plat à raideur variable est également possible dans le cas d'une électrovanne à noyau mobile plongeur, de par la différence de diamètre pouvant exister entre les couronnes centrale et périphérique, en raison du montage du ressort sur le noyau plongeur par le trou de faible diamètre de la couronne centrale.

Par contre, les ressorts plats à raideur variable connus utilisés sur les électrovannes à noyau mobile plongeur sont inadaptés à une utilisation sur des électrovannes à noyau mobile plat, compte tenu de la plus faible différence de diamètre entre les couronnes centrale et périphérique.

Il n'est pas facile, par ailleurs, de réduire le diamètre de la portion du noyau mobile sur laquelle est engagé le ressort plat, car une telle diminution peut réduire l'étendue de matériau ferromagnétique du noyau mobile en regard du noyau fixe et corrélativement la force d'attraction exercée par la bobine. De plus, le joint de clapet est souvent double face et le noyau fixe parcouru par un canal interne relié à un échappement, et le noyau fixe doit pouvoir servir de siège au joint de clapet en position de collage. Il y a des électrovannes connues à noyau mobile plat utilisant des ressorts plats à raideur variable, par exemple celui illustré à la figure 1B ou aux figures 3A et 3B du brevet EP 1 217272 B1.

Le document US 7 748 683 divulgue un ressort de rappel comportant des pattes de centrage et des pattes de rappel, les pattes ne travaillant qu'en flexion.

Le document FR 2 348 058 enseigne des électro-aimants à ressort pour imprimantes.

Il a par ailleurs également été proposé d'utiliser des ressorts à raideur variable dans des électrovannes dites proportionnelles, dans lesquelles la non linéarité de l'effort du ressort vient en opposition avec la non-linéarité de l'effort électromagnétique de la bobine, afin de générer une force résultante sensiblement constante.

La présente invention vise à perfectionner encore les électrovannes de construction dite à noyau mobile plat, en permettant notamment un fonctionnement avec un courant de fuite relativement important et/ou l'emploi de matériaux présentant une rémanence magnétique relativement grande, sans pour autant que les performances de l'électrovanne en termes de fiabilité de fonctionnement, de consommation électrique et de coût de fabrication soient diminuées.

L'invention a ainsi pour objet, selon un premier de ses aspects, une électrovanne comportant :

- une bobine,
- un noyau fixe disposé à l'intérieur de la bobine,
- un noyau mobile plat disposé à l'extérieur de la bobine, portant un joint de clapet,
- un ressort de rappel pour solliciter le noyau mobile dans une position de repos, notamment une position où un orifice de l'électrovanne est fermé par le joint de clapet.

Conformément à l'invention, le ressort de rappel équipant une telle électrovanne est un ressort plat à raideur variable. Ce ressort comporte une couronne centrale, une couronne périphérique et des bras flexibles reliant ces couronnes, comportant des portions travaillant en flexion et d'autres en torsion lors d'un allongement du ressort, les couronnes centrale et périphérique étant de préférence en appui sans encastrement sur des surfaces correspondantes de l'électrovanne.

L'invention repose sur la constatation qu'il est possible, notamment en évitant les liaisons à encastrement, de réaliser un ressort plat à raideur variable pour une électrovanne à noyau mobile plat, malgré les contraintes d'encombrement qui limitent l'étendue de la zone annulaire comprenant les parties déformables et élastiques du ressort.

Grâce à l'invention, il est possible de bénéficier d'une force de rappel du noyau mobile plus importante après cessation de l'excitation électrique de la bobine, même en présence d'un courant d'alimentation résiduel et d'une rémanence magnétique des matériaux utilisés. L'absence d'encastrement du ressort permet avantageusement à celui-ci de conserver une raideur relativement faible et ainsi d'assurer un fonctionnement satisfaisant, y compris en présence des tolérances de fabrication.

La non-linéarité de la raideur du ressort permet qu'en position de repos l'effort exercé par le joint de clapet sur son siège reste modéré et le ressort de rappel ne contrarie ainsi pas outre mesure le décollement du joint de clapet lorsque la bobine est excitée.

Les portions des bras travaillant en torsion sont séparées, dans la direction radiale, de la couronne centrale et de la couronne périphérique par une ou plusieurs portions ajourées. Une telle disposition facilite la déformation des bras flexibles en torsion sans trop accroître la raideur du ressort à l'élongation maximale atteinte durant le fonctionnement de l'électrovanne.

Dans un exemple de mise en oeuvre de l'invention, le ressort comporte des portions travaillant en torsion qui présentent une forme semi-circulaire. Le ressort comporte des portions travaillant en flexion, de préférence sous forme de secteurs concentriques ou parallèles. Un tel agencement permet d'obtenir une bonne variabilité de la raideur tout en conférant également une bonne résistance à des déformations répétées.

Certaines portions travaillant en flexion peuvent être reliées chacune à la couronne périphérique par un pont de matière situé sensiblement à mi-longueur et d'autres être reliées chacune à la couronne centrale par deux ponts de matière espacés l'un de l'autre.

De préférence, les bras s'étendent au sein d'une zone annulaire de déformabilité du ressort, délimitée radialement par le trou de la couronne centrale et le contour extérieur de la couronne périphérique. Cette zone annulaire occupe de manière préférentielle moins de 80 % de la surface du disque plein défini par le contour extérieur de la couronne périphérique, soit moins de $0.8 \times \frac{1}{4} \pi D^2_{ext}$ dans le cas d'une couronne extérieure circulaire de diamètre $D_{ext}$.

La plus grande dimension du ressort plat est par exemple inférieure ou égale à 20 mm, voire à 15 mm, 11 mm, 10 mm, 7 mm ou 6 mm.

Les ponts de matière se raccordant à la couronne centrale peuvent être en un nombre supérieur à trois, ce nombre étant par exemple égal à six. La différence de rayon entre le trou de la couronne centrale et celui du pourtour de la couronne périphérique peut être inférieure au diamètre du trou central.

Deux portions travaillant en flexion et deux portions travaillant en torsion et reliant ces parties travaillant en flexion peuvent délimiter ensemble une lumière réniforme, de contour fermé. La portion travaillant en flexion, radialement la plus intérieure, peut être reliée à la couronne centrale par deux ponts de matière espacés l'un de l'autre, de préférence respectivement sensiblement à 1/4 et 3/4 de la longueur de ladite portion.

Le ressort peut comporter des portions travaillant en flexion, dont l'une au moins s'étend, ou s'étendant chacune, angulairement sur plus de 90°, notamment entre 90° et 110°, par exemple, sensiblement 100°, autour de l'axe du ressort.

Le ressort peut comporter une couronne périphérique comportant une encoche sur son contour extérieur et une protubérance sur son bord intérieur, opposé à l'encoche.

Le ressort plat présente avantageusement un coefficient C de variabilité de sa raideur supérieur ou égal à 1,3, mieux à 1,75, encore mieux à 1,9.

Le ressort comporte une couronne centrale, la plus grande dimension, notamment le diamètre $D_{int}$, du trou défini par la couronne centrale, peut être compris entre 3 et 10 mm.

La plus grande dimension du ressort, notamment le diamètre extérieur $D_{ext}$ peut être compris entre 6 et 20 mm.

L'invention pourra être mieux comprise à la lecture de la description détaillée qui va suivre, d'exemples de mise en oeuvre non limitatifs de celle-ci, et à l'examen du dessin annexé, sur lequel:

- les figures 1A et 1B, précédemment décrites, représentent des exemples de ressorts plats connus,
- la figure 2 est une coupe longitudinale, schématique et partielle, d'un exemple d'électrovanne miniature à noyau mobile plat selon l'invention,
- la figure 3 est une vue de face d'un exemple de ressort plat pouvant avantageusement être utilisé dans l'électrovanne de la figure 2,
- la figure 4 représente l'évolution de la force de rappel en fonction de l'allongement du ressort, dans le cas d'un ressort plat à raideur constante selon l'art antérieur et d'un ressort plat à raideur variable selon l'invention, et
- les figures 5A à 5E sont des vues analogues à la figure 3 de variantes de réalisation du ressort plat.

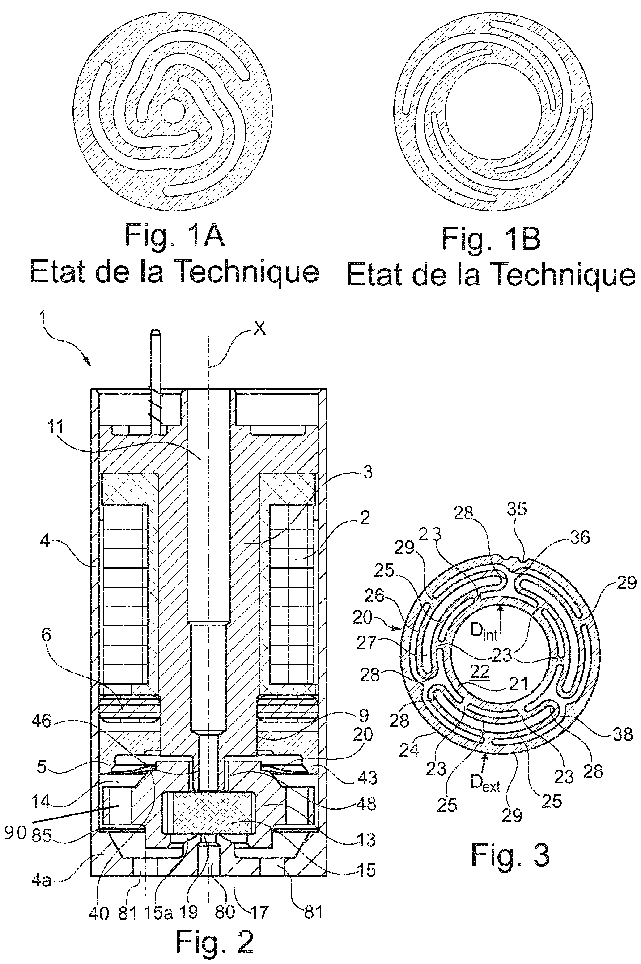

On a représenté à la figure 2 un exemple d'électrovanne miniature selon l'invention, comportant de façon conventionnelle une bobine électrique 2, traversée par un noyau magnétique fixe 3 en un matériau ferromagnétique, l'ensemble étant par exemple logé comme illustré dans un carter 4 s'étendant longitudinalement selon un axe X, ce carter 4 étant de préférence également dans un matériau ferromagnétique.

L'électrovanne 1 comporte une bague d'appui 5 logée dans le carter 4 et un joint d'étanchéité 6 disposé entre la bague 5 et la bobine 2 dans le carter 4. Ce joint 6 s'applique sur son plus grand diamètre sur la surface radialement intérieure du carter 4 et par son plus petit diamètre sur le noyau fixe 3.

La bague 5 présente une ouverture centrale 9 traversée par le noyau fixe 3. Ce dernier est parcouru intérieurement et axialement par un canal interne 11 qui permet l'échappement du fluide, en configuration de repos de l'électrovanne.

L'électrovanne 1 comporte un noyau mobile plat 13 en un matériau ferromagnétique, qui peut se déplacer selon l'axe X dans un logement 14 du carter 4, sous l'effet du champ magnétique généré par la bobine 2 lorsque celle-ci est parcourue par un courant électrique.

Le noyau mobile plat 13 porte un joint de clapet 15 double face qui s'applique au repos par sa face inférieure 15a contre un siège 17, lequel délimite un orifice 19 en communication avec une source de fluide, par exemple de l'air comprimé.

Un ressort plat de rappel 20 sollicite le noyau 13 contre le siège 17 en l'absence d'excitation électrique de la bobine 2. Le ressort 20 est engagé sur le noyau 13 et vient par sa face supérieure en appui contre la face inférieure 43 de la bague 5.

Le noyau fixe 3 est prolongé inférieurement par un embout 46 qui s'engage dans le noyau mobile plat 13 et définit un orifice communiquant avec le canal interne 11. L'embout 46 sert de siège à la face supérieure du joint de clapet 15 lorsque la bobine est alimentée et le noyau mobile plat 13 en position de collage. Lorsque le joint de clapet 15 du noyau mobile plat 13 repose contre son siège 17, le logement 14 communique avec le canal interne 11.

Le ressort 20 a été représenté isolément, de face, à la figure 3.

On voit que celui-ci comporte une couronne centrale 21 délimitant un trou 22 de diamètre $D_{int}$ relativement important, servant au montage sur le noyau mobile plat 13, à hauteur de la portion de celui-ci engagée sur l'embout 46, au-dessus du joint de clapet 15.

Le ressort 20 comporte également une couronne périphérique 24 de diamètre $D_{ext}$, lequel est par exemple inférieur ou égal à 10 mm. $D_{int}$ est par exemple supérieur ou égal à 4,9 mm.

Des bras flexibles relient les couronnes centrale 21 et périphérique 24, de manière à conférer au ressort une déformabilité élastique à raideur variable.

Dans l'exemple illustré, ces bras sont formés par attaque chimique d'une feuille de métal, par exemple d'acier à ressort, mais d'autres méthodes de fabrication sont utilisables.

Les bras comportent des portions 25, travaillant en flexion, concentriques, reliées entre elles à leurs extrémités par des portions 28 travaillant en torsion, demi-circulaires.

Par « portion travaillant en flexion », il faut comprendre que lors de l'allongement du ressort, c'est-à-dire de l'éloignement selon l'axe X des plans des couronnes centrale et périphérique, cette portion se déforme principalement en flexion pour stocker de l'énergie potentielle élastique, la section transversale de cette portion restant sensiblement parallèle à elle-même lors de la flexion.

Par « portion travaillant en torsion », il faut comprendre que lors de l'allongement du ressort, cette partie se déforme principalement en torsion pour stocker de l'énergie potentielle élastique. Lors d'une torsion, la section transversale du bras tourne autour d'un axe qui lui est perpendiculaire.

La portion 25 radialement la plus extérieure est reliée, sensiblement à mi-longueur, par un pont de matière 29, à la couronne périphérique 24 et la portion 25 radialement la plus intérieure est reliée à la couronne centrale 21 par deux ponts de matière 23.

De préférence, comme illustré, tous les ponts 23 sont équi-répartis angulairement autour de l'axe du ressort, de même que les ponts 29.

Chaque ensemble élastiquement déformable formé par deux portions 25 reliées à leurs extrémités par les portions 28 définit une lumière réniforme 27, de contour fermé.

De plus, on voit que lorsque l'on se déplace suivant un rayon, les portions 28 sont séparées des couronnes 21 et 24 par une portion ajourée 38 qui s'étend d'une part entre les portions 25 et les couronnes 21 et 24 jusqu'aux ponts 29 et 23 et d'autre part entre les portions 28 appartenant à deux ensembles adjacents.

Ainsi, chaque portion ajourée 38 s'étend entre les couronnes centrale 21 et périphérique 24 jusqu'à ces dernières.

Chaque portion 25 s'étend par exemple angulairement sur environ 100° autour de l'axe du ressort, comme illustré. Les ponts 23 se situent par exemple respectivement environ à 1/4 et 3/4 de la longueur de la portion 25 radialement la plus intérieure.

L'écart entre les deux portions 25 adjacentes, mesuré dans la direction radiale, est par exemple supérieur à l'écart entre chaque portion 25 et la couronne 21 ou 24 adjacente, comme on peut le voir sur la figure 3. Un plan passant par un pont de matière 29 est par exemple, comme illustré, un plan de symétrie pour les ponts 23 angulairement les plus proches.

Une double encoche 35 peut être présente comme illustré sur le pourtour extérieur de la couronne périphérique 24, sa présence étant liée au procédé de fabrication. Une protubérance 36 compense sur le bord opposé la perte de matière liée à la double encoche 35, dans la région de celle-ci.

Le ressort 20 est monté sans encastrement sur l'électrovanne 1, la couronne centrale 21 venant librement en appui contre un épaulement 40 du noyau mobile plat 13, formé sur sa face tournée en regard de la bague d'appui 5.

La couronne périphérique 24 vient en appui contre la face inférieure 43 de la bague d'appui 5. Ainsi, le ressort 20 n'est pas encastré au niveau des couronnes 21 et 24, et ces dernières s'appuient sur toute leur circonférence respectivement sur le noyau mobile plat 13 et la bague 5.

Une rondelle de guidage 85 s'étend dans le logement 14, autour du noyau mobile plat 13.

Des passages axiaux 90 sont réalisés à travers le noyau mobile 13, pour permettre au fluide de se répandre plus facilement dans le logement 14 et de s'échapper par le canal interne 11 lorsque l'électrovanne 1 est non alimentée.

Le carter 4 peut présenter une paroi de fond 4a s'étendant perpendiculairement à l'axe X, traversée par un canal 80 débouchant par l'orifice 19 en regard du joint de clapet 15 et par des canaux 81 communiquant d'une part avec le logement 14 et d'autre part avec un dispositif vers lequel le fluide provenant de l'orifice 19 doit être envoyé quand le noyau mobile 13 est en position de collage.

Lorsque le joint de clapet 15 s'applique au repos contre son siège 17, l'orifice 19 est obturé. Quand l'électrovanne 1 est alimentée électriquement, et le joint de clapet 15 en position de collage, les canaux 80 et 81 communiquent, tandis que le canal 11 est fermé par le joint de clapet 15 qui s'applique contre l'embout 46. Des joints non représentés peuvent assurer l'étanchéité des raccordements.

Lorsque la bobine 2 est alimentée, le flux magnétique circule le long du noyau fixe 3, passe dans le noyau mobile plat 13 par l'entrefer axial existant entre les deux, et reboucle vers le noyau fixe 3 en circulant par l'entrefer radial entre le noyau mobile plat 13 et le carter 4, puis dans ce dernier.

La bague 5 peut être sertie dans le carter 4 au cours de la fabrication de l'électrovanne, après montage du ressort, de façon à précharger le ressort 20 de façon adéquate.

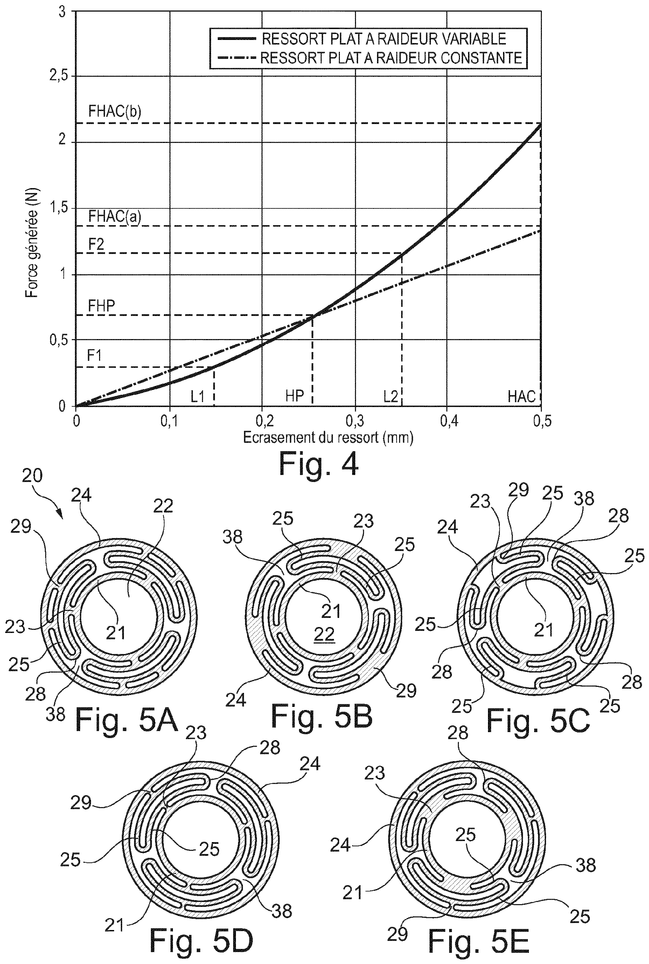

On a représenté sur la figure 4 la variation de la force de rappel en fonction de l'allongement (encore appelé écrasement) du ressort, pour un ressort selon l'invention tel qu'illustré à la figure 3 et un ressort à raideur constante selon l'état de la technique, tel qu'illustré à la figure 1B.

Par « ressort à raideur constante » il faut comprendre que la force de rappel liée à l'élongation du ressort est sensiblement linéaire sur la plage de fonctionnement du ressort dans l'électrovanne, le coefficient de non-linéarité C tel que défini ci-après étant par exemple inférieur ou égal à 1,1.

Dans une électrovanne à noyau mobile plat, notamment tel qu'illustré à la figure 2, la course en déplacement du noyau mobile 13 entre les positions de repos et de collage est relativement faible et typiquement comprise entre 0,15 mm et 0,3 mm.

Le ressort 20 est préchargé, c'est-à-dire que son allongement au repos n'est pas nul, étant par exemple supérieur ou égal à 0,2 mm.

Sur la figure 4 :

- HP désigne la Hauteur Posée (électrovanne avec noyau mobile en position de repos),
- HAC la Hauteur Après Course (électrovanne avec noyau mobile en position de collage),
- FHP la Force à Hauteur Posée,
- FHAC(a) la Force à Hauteur Après Course (dans le cas du ressort à raideur constante), et
- FHAC(b) la Force à Hauteur Après Course (dans le cas du ressort à raideur variable).

On peut définir un coefficient C de variabilité de la raideur du ressort plat. Ce coefficient C est défini en calculant le rapport entre deux valeurs de raideur du même ressort, prises à deux positions d'écrasement différentes :

$$C = R2/R1 = [\,(F2b - F2a) / (L2b - L2a)\,] / [\,(F1b - F1a) / (L1b - L1a)\,]$$

avec :

- R1 est le coefficient de raideur instantanée en position L1,
- R2 est le coefficient de raideur instantanée en position L2,
- L1 est la position correspondant à 30 % de l'écrasement maximal défini (ressort légèrement comprimé),
- L2 est la position correspondant à 70 % de l'écrasement maximal défini (ressort fortement comprimé),
- L1a = L1 - 10 % de l'écrasement maximal défini,
- L1b = L1 + 10 % de l'écrasement maximal défini,
- L2a = L2 - 10 % de l'écrasement maximal défini,
- L2b = L2 + 10 % de l'écrasement maximal défini,
- F1a est l'effort du ressort à la position L1a,
- F1b est l'effort du ressort à la position L1b,
- F2a est l'effort du ressort à la position L2a, et
- F2b est l'effort du ressort à la position L2b.

L'écrasement maximal défini est égal à l'écrasement du ressort, entre le ressort à plat tel que fabriqué (allongement nul) et l'écrasement lors du collage.

Dans le cas d'une raideur constante, le coefficient de variabilité C est sensiblement égal à 1, comme expliqué plus haut.

De préférence, la valeur du coefficient C pour un ressort plat selon l'invention est supérieure ou égale à 1,3, mieux à 1,75, voire à 1,9.

Dans l'exemple illustré à la figure 4, C est égal à 1,897, avec :

- L1 = 0.15 mm
- L2 = 0.35 mm
- L1a = 0.1 mm

- L1b = 0.2 mm
- L2a = 0.3 mm
- L2b = 0.4 mm
- F1a = 0.17N
- F1b = 0.46 N
- F2a = 0.89 N
- F2b = 1.44 N

$$C = [(1.44 - 0.89) / (0.4 - 0.3)] / [(0.46 - 0.17) / (0.2 - 0.1)] = 1.897$$

Comme on peut le constater à l'examen de la figure 4, la raideur du ressort selon l'invention est non linéaire, ce qui permet à la force de rappel générée d'être la même pour un faible écrasement comparativement à un ressort plat à raideur constante et plus importante pour un écrasement plus grand ; ainsi le décollement du joint de clapet de son siège lorsque la bobine est excitée n'est pas empêché et le ressort garantit le retour du noyau en position de repos lorsque la bobine cesse d'être alimentée, malgré l'existence d'un courant de fuite et/ou d'une rémanence magnétique éventuellement plus importants.

Bien entendu, l'invention n'est pas limitée à l'exemple qui vient d'être décrit.

La disposition des ponts de matière reliant les portions 25 aux couronnes 21 et 24 peut être modifiée et l'on a par exemple la portion 25 radialement la plus intérieure qui est reliée à la couronne centrale 21 par un seul pont de matière 23 et la portion 25 radialement la plus extérieure qui est reliée à la couronne périphérique par deux ponts de matière 29, comme illustré à la figure 5A, ressort pour lequel on a par exemple C ≈ 1,3.

La forme des portions 28 travaillant en torsion peut être modifiée et ne plus être demi-circulaire, étant par exemple rectiligne et radiale.

Les portions 25 peuvent ne plus s'étendre selon des arcs de cercle mais selon des lignes ondulées, en suivant une ligne médiane qui est en arc de cercle par exemple.

On a représenté aux figures 5B à 5E d'autres exemples de ressorts plats conformes à l'invention, pour lesquels on a par exemple respectivement des valeurs du coefficient C égales à 1,3, 1,3, 1,5 et 1,8 environ.

On peut remarquer à l'examen de la figure 5C que les bras flexibles peuvent comporter chacun une portion 25 travaillant en flexion, reliée à la couronne centrale 21 par au moins un pont de matière 23, notamment un seul pont situé à mi-largeur, deux portions 28 travaillant en torsion, à chacune des extrémités de cette portion 25, par exemple de forme demi-circulaire à l'instar des exemples précédemment décrits, ces portions 28 se raccordant à deux portions 25 travaillant chacune en flexion, ces portions se raccordant à la couronne 24 par un pont de matière 29 à leur extrémité opposée à la portion 28 correspondante.

Le nombre de bras flexibles pourrait être réduit à 2 ou augmenté à 4, par exemple.

Le ressort plat peut présenter, dans des variantes non illustrées, une couronne centrale non circulaire, de forme polygonale par exemple, notamment carrée ou hexagonale.

Lorsque le trou central est de forme polygonale, les portions travaillant en flexion peuvent s'étendre parallèlement aux côtés de ce trou.

La couronne périphérique peut également être non circulaire, étant par exemple polygonale, notamment carrée ou hexagonale.

Le ressort plat est de préférence réalisé par attaque chimique d'un feuillard métallique mais, en variante, le ressort plat peut être obtenu par d'autres techniques, par exemple par découpe laser.

Le ressort plat est de préférence réalisé avec une épaisseur constante mais, en variante, certaines régions peuvent être réalisées avec une épaisseur variable, par exemple pour augmenter ou diminuer localement la raideur ou la résistance à des déformations répétées. Ainsi, les portions travaillant en torsion peuvent être réalisées avec une épaisseur plus faible, par exemple.

On peut apporter à l'électrovanne des modifications diverses.

L'électrovanne peut comporter plus d'un ressort, le cas échéant. L'électrovanne peut par exemple comporter un ressort additionnel de compensation de la dilatation thermique notamment, ce ressort additionnel agissant par exemple entre le joint de clapet et le noyau mobile.

Dans une variante, l'électrovanne est multiple et comporte plusieurs ressorts plats pour assurer le rappel de plusieurs noyaux mobiles respectifs indépendants, ces ressorts appartenant par exemple à une même pièce de l'électrovanne, comme illustré à la figure 5b du brevet EP 1 350 999 B1.

Le noyau mobile peut être réalisé avec une forme différente, et notamment la face du noyau mobile située en regard du noyau fixe peut présenter un évidement conique ou étagé, comme illustré aux figures 7 et 7b de la demande WO 2011/095928.

Le carter peut être réalisé autrement et par exemple au moins partiellement de façon monolithique avec le noyau fixe, comme décrit dans la demande EP 1 217 272. Le carter peut être réalisé avec une paroi de fond rapportée.

Le ressort peut être monté avec jeu ou avec serrage radial dans le carter et/ou sur le noyau mobile.

Lorsque la nature du dispositif qui utilise le ressort et/ou les conditions de fonctionnement le permettent, le ressort plat peut être fixé avec encastrement, au niveau du trou central et/ou du contour extérieur.

L'électrovanne peut comporter un ou plusieurs aimants permanents de façon à obtenir un fonctionnement dit à double impulsion.

L'électrovanne peut être réalisée sans le canal interne traversant le noyau fixe, ou avec d'autres agencements fluidiques.

De préférence, la position de repos du noyau mobile de l'électrovanne correspond à la fermeture d'un orifice d'admission en fluide ; en variante, cette position de repos correspond à tout autre état prédéfini de communication fluidique. Dans tous les cas, la portée de l'invention est définie par les revendications annexées.

Le fluide peut être autre que de l'air comprimé, et être un autre gaz ou un liquide.

L'expression « comportant un » doit être comprise comme étant synonyme de « comportant au moins un ».

## Revendications

1. Electrovanne (1) comportant :

   - une bobine (2),
   - un noyau fixe (3) disposé à l'intérieur de la bobine,
   - un noyau mobile plat (13) disposé à l'extérieur de la bobine, portant un joint de clapet (15),
   - un ressort plat de rappel (20) pour solliciter le noyau mobile dans une position de repos, le ressort plat (20) étant à raideur variable, de préférence en appui sans encastrement sur des surfaces correspondantes de l'électrovanne, l'électrovanne **caractérisée par le fait que** le ressort comporte une couronne centrale (21) et une couronne périphérique (24) reliées par des bras flexibles qui comportent des portions (25) travaillant en flexion et d'autres (28) en torsion lors d'un allongement du ressort, les portions (28) travaillant en torsion sont séparées à la fois des couronnes centrale (21) et périphérique (24), dans la direction radiale, par une ou plusieurs portions ajourées (38).

2. Electrovanne selon la revendication 1, les portions (25) travaillant en flexion étant disposées concentriquement ou parallèlement.

3. Electrovanne selon la revendication 1 ou 2, les portions (28) travaillant en torsion reliant chacune deux portions (25) travaillant en flexion.

4. Electrovanne selon la revendication 3, les portions (28) travaillant en torsion ayant une forme demi-circulaire.

5. Electrovanne selon la revendication 3 ou 4, les portions (25) travaillant en flexion étant agencées par paires et reliées à leurs extrémités par les portions (28) travaillant en torsion, la portion (25) travaillant en flexion radialement la plus extérieure étant reliée à la couronne périphérique (24) et la portion (25) travaillant en flexion radialement la plus intérieure étant reliée à la couronne centrale (21).

6. Electrovanne selon la revendication 5, la portion (25) radialement la plus extérieure étant reliée à la couronne périphérique (24) par un unique pont de matière (29), situé de préférence à mi-longueur.

7. Electrovanne selon la revendication 5 ou 6, la portion (25) radialement la plus intérieure étant reliée à la couronne centrale (21) par deux ponts de matière (23) espacés l'un de l'autre, de préférence respectivement sensiblement à 1/4 et 3/4 de la longueur de ladite portion (25).

8. Electrovanne selon l'une quelconque des revendications 1 à 7, les portions (25) travaillant en flexion, dont l'une au moins s'étend, ou s'étendant chacune, angulairement sur sensiblement 100° autour de l'axe du ressort.

9. Electrovanne selon l'une quelconque des revendications 1 à 8, la couronne périphérique (24) comportant une encoche (35) sur son contour extérieur et une protubérance (36) sur son bord intérieur, opposé à l'encoche.

10. Electrovanne selon l'une quelconque des revendications précédentes le ressort plat (20) présentant un coefficient C de variabilité de sa raideur supérieur ou égal à 1,3, mieux à 1,75, encore mieux à 1,9.

**11.** Electrovanne selon l'une quelconque des revendications précédentes, la plus grande dimension, notamment le diamètre $D_{int}$, du trou (22) défini par la couronne centrale (21), étant compris entre 3 et 10 mm.

**12.** Electrovanne selon l'une quelconque des revendications précédentes, la plus grande dimension du ressort, notamment le diamètre extérieur $D_{ext}$ étant compris entre 6 et 20 mm.

**13.** Electrovanne selon l'une quelconque des revendications précédentes, la zone annulaire définie entre le trou (22) de la couronne centrale (21) et le contour extérieur de la couronne périphérique (24) occupant moins de 80 % de la surface du disque plein défini par le contour extérieur de la couronne périphérique (24).


**Patentansprüche**

**1.** Elektromagnetisches Ventil (1), umfassend:

- eine Spule (2),
- einen im Inneren der Spule angeordneten festen Kern (3),
- einen außerhalb der Spule angeordneten flachen beweglichen Kern (13), der eine Klappendichtung (15) trägt,
- eine flache Rückstellfeder (20) zum Vorspannen des beweglichen Kerns in eine Ruhestellung, wobei die flache Feder (20) eine variable Steifigkeit aufweist und vorzugsweise ohne Einspannung an entsprechenden Flächen des Magnetventils anliegt,

wobei das Magnetventil **dadurch gekennzeichnet ist, dass** die Feder einen mittleren Kranz (21) und einen peripheren Kranz (24) aufweist, die durch flexible Arme verbunden sind, die Abschnitte (25), die bei einer Dehnung der Feder auf Flexion beansprucht werden, und andere (28), die auf Torsion beansprucht werden, aufweisen, wobei die auf Torsion beanspruchten Abschnitte (28) in der radialen Richtung durch einen oder mehrere durchbrochene Abschnitte (38) sowohl vom mittleren Kranz (21) als auch vom peripheren Kranz (24) getrennt sind.

**2.** Elektromagnetisches Ventil nach Anspruch 1, wobei die auf Flexion beanspruchten Abschnitte (25) konzentrisch oder parallel angeordnet sind.

**3.** Elektromagnetisches Ventil nach Anspruch 1 oder 2, wobei die auf Torsion beanspruchten Abschnitte (28) jeweils zwei auf Flexion beanspruchte Abschnitte (25) verbinden.

**4.** Elektromagnetisches Ventil nach Anspruch 3, wobei die auf Torsion beanspruchten Abschnitte (28) eine halbkreisförmige Form aufweisen.

**5.** Elektromagnetisches Ventil nach Anspruch 3 oder 4, wobei die auf Flexion beanspruchten Abschnitte (25) paarweise angeordnet und an ihren Enden durch die auf Torsion beanspruchten Abschnitte (28) verbunden sind, wobei der radial äußerste auf Flexion beanspruchte Abschnitt (25) mit dem peripheren Kranz (24) verbunden ist und der radial innerste auf Flexion beanspruchte Abschnitt (25) mit dem mittleren Kranz (21) verbunden ist.

**6.** Elektromagnetisches Ventil nach Anspruch 5, wobei der radial äußerste Abschnitt (25) durch eine einzige Materialbrücke (29), die sich vorzugsweise in der Mitte der Länge befindet, mit dem peripheren Kranz (24) verbunden ist.

**7.** Elektromagnetisches Ventil nach Anspruch 5 oder 6, wobei der radial innerste Abschnitt (25) durch zwei voneinander beabstandete Materialbrücken (23), die sich vorzugsweise bei 1/4 bzw. 3/4 der Länge des Abschnitts (25) befinden, mit dem mittleren Kranz (21) verbunden ist.

**8.** Elektromagnetisches Ventil nach einem der Ansprüche 1 bis 7, wobei sich von den auf Flexion beanspruchten Abschnitten (25) mindestens einer oder jeder winkelmäßig über im Wesentlichen 100° um die Federachse erstreckt.

**9.** Elektromagnetisches Ventil nach einem der Ansprüche 1 bis 8, wobei der periphere Kranz (24) an seiner Außenkontur eine Einkerbung (35) und an seiner Innenkante, der Einkerbung gegenüberliegend, einen Vorsprung (36) aufweist.

**10.** Elektromagnetisches Ventil nach einem der vorangehenden Ansprüche, wobei die flache Feder (20) einen Steifigkeitsvariabilitätskoeffizienten C von 1,3 oder mehr, besser 1,75 oder mehr und noch besser 1,9 oder mehr, aufweist.

**11.** Elektromagnetisches Ventil nach einem der vorangehenden Ansprüche, wobei die größte Abmessung, insbesondere der Durchmesser $D_{int}$ des durch den mittleren Kranz (21) definierten Lochs (22), zwischen 3 und 10 mm beträgt.

**12.** Elektromagnetisches Ventil nach einem der vorangehenden Ansprüche, wobei die größte Abmessung der Feder, insbesondere der Außendurchmesser $D_{ext}$, zwischen 6 und 20 mm beträgt.

**13.** Elektromagnetisches Ventil nach einem der vorangehenden Ansprüche, wobei der zwischen dem Loch (22) des mittleren Kranzes (21) und der Außenkontur des peripheren Kranzes (24) definierte ringförmige Bereich weniger als 80 % der Fläche der gesamten durch die Außenkontur des peripheren Kranzes (24) definierten Scheibe ausmacht.

**Claims**

**1.** Solenoid valve (1) having:

- a coil (2),
- a fixed core (3) disposed inside the coil,
- a flat movable core (13) disposed outside the coil, bearing a valve gasket (15),
- a flat return spring (20) to urge the movable core into a rest position, the flat spring (20) having a variable stiffness, preferably bearing without embedding on corresponding surfaces of the solenoid valve, the solenoid valve being **characterized by** the fact that the spring has a central ring (21) and a peripheral ring (24) that are linked by flexible arms that have portions (25) that work in flexion and others (28) that work in torsion during elongation of the spring, the portions (28) that work in torsion being separated from both the central ring (21) and the peripheral ring (24), in the radial direction, by one or more cut-out portions (38).

**2.** Solenoid valve according to Claim 1, the portions (25) that work in flexion being disposed concentrically or in parallel.

**3.** Solenoid valve according to Claim 1 or 2, the portions (28) that work in torsion each linking two portions (25) that work in flexion.

**4.** Solenoid valve according to Claim 3, the portions (28) that work in torsion having a semi-circular shape.

**5.** Solenoid valve according to Claim 3 or 4, the portions (25) that work in flexion being arranged in pairs and linked at their ends by the portions (28) that work in torsion, the radially outermost portion (25) that works in flexion being linked to the peripheral ring (24) and the radially innermost portion (25) that works in flexion being linked to the central ring (21).

**6.** Solenoid valve according to Claim 5, the radially outermost portion (25) being linked to the peripheral ring (24) by a single material bridge (29), preferably situated at mid-length.

**7.** Solenoid valve according to Claim 5 or 6, the radially innermost portion (25) being linked to the central ring (21) by two material bridges (23) spaced apart from one another, preferably respectively substantially at 1/4 and 3/4 of the length of said portion (25) .

**8.** Solenoid valve according to any one of Claims 1 to 7, of the portions (25) that work in flexion, at least one or each extends angularly over substantially 100° around the axis of the spring.

**9.** Solenoid valve according to any one of Claims 1 to 8, the peripheral ring (24) having a notch (35) on its outer contour and a protuberance (36) on its inner edge, opposite the notch.

**10.** Solenoid valve according to any one of the preceding claims, the flat spring (20) exhibiting a coefficient C of variability of its stiffness that is greater than or equal to 1.3, better still greater than or equal to 1.75, even better still greater than or equal to 1.9.

**11.** Solenoid valve according to any one of the preceding claims, the greatest dimension, notably the diameter $D_{int}$, of the hole (22) defined by the central ring (21), being between 3 and 10 mm.

**12.** Solenoid valve according to any one of the preceding claims, the greatest dimension of the spring, notably the outer

diameter $D_{ext}$, being between 6 and 20 mm.

13. Solenoid valve according to any one of the preceding claims, the annular region defined between the hole (22) of the central ring (21) and the outer contour of the peripheral ring (24) occupying less than 80% of the surface area of the solid disc defined by the outer contour of the peripheral ring (24).

Fig. 1A
Etat de la Technique

Fig. 1B
Etat de la Technique

Fig. 2

Fig. 3

Fig. 4

Fig. 5A

Fig. 5B

Fig. 5C

Fig. 5D

Fig. 5E

**EP 2 682 655 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1536169 B1
- WO 2011095928 A
- WO 2008028509 A
- EP 1350999 B1
- EP 1217272 B1
- US 7748683 B
- FR 2348058
- EP 1217272 A